# EUROPEAN PATENT APPLICATION

(11) **EP 3 677 906 A1**
(43) Date of publication of application: **08.07.2020**
(21) Application number: 19150055.2
(22) Date of filing: 02.01.2019
(51) Int. Cl.: G01N 29/04, G01N 29/24

(54) **METHOD, MOBILE DEVICE AND SYSTEM FOR DETECTING DEFECTS IN AN INSULATION PANEL**

(71) Applicant: Covestro Deutschland AG, 51373 Leverkusen (DE)
(72) Inventor: GAO, Jianwu, Baoshan District Shanghai, 201901 (CN); WEI, Wenping, Huangpu District Shanghai, 200025 (CN); LI, Liqiang, Shanghai, 200120 (CN); HAESSLER, Christian, 53227 Bonn (DE)
(74) Representative: Levpat

(57) **Abstract**

The invention is directed at a method for detecting defects (4) in an insulation panel (1), which insulation panel (1) comprises a solid foam core (3), wherein a mobile application (7) is executed on a mobile device (5), wherein an emitting apparatus (9) emits an outgoing acoustic signal (13) into the solid foam core (3) for detecting defects (4) in the solid foam core (3), wherein a reception apparatus (10) receives an incoming acoustic signal (14), wherein the received incoming acoustic signal (14) is relayed to the mobile application (7), wherein the received incoming acoustic signal (14) is analyzed and wherein based upon the analysis of the received incoming acoustic signal (14) a defect detection result is generated. The invention is also directed at a corresponding mobile device (5) and a system for detecting defects (4) in an insulation panel (1).

## Description

The invention is directed at a method for detecting defects in an insulation panel and at a mobile device and a system for detecting defects in an insulation panel.

Insulation panels are nowadays used for a variety of application purposes. In particular, by providing rigid structures with thermal insulation, they make it possible to construct refrigerated containers, which are also called reefers. Such refrigerated containers allow the bulk transport of refrigerated goods over great distances and have thereby revolutionized the logistics in particular of perishable food. In order for the thermal insulation to be effective, it is desired that the insulation panel, which comprises a polyurethane core, be homogeneous and without substantial defects. Such defects often present themselves as voids in the polyurethane foam. Because the insulation panels have a thickness which is not negligible, such voids are often within the body of the insulation panel and therefore not at its surface. In this case, a non-destructive visual inspection of the insulation panel is not suitable for identifying any voids within the insulation panel.

Because the insulation panels for refrigerated containers are very large, an automated defect detection would require very large and expensive machinery for handling the insulation panel, which is often not available when such an inspection of the insulation panel is desired. Therefore, a common approach from the prior art for detecting defects in insulation panel consists of a worker hitting the insulation panel with a hammer in different sections. The worker then, based on intuition and past experience, evaluates the resulting sound. The idea is that when a defect is present, the sound resulting from the impact is different from the sound when the insulation panel has no defect. Thus, the presence and approximate location of a void defect may be detected in the insulation panel. However, the success of this approach depends on the skill and experience of the worker performing it. It is not easily systematized. Moreover, a new worker will not be able to apply it successfully without having a lot of experience.

Therefore the object of the invention is to provide a method, mobile device and a system for detecting defects in an insulation panel which is more precise, better reproduceable and depends less on the skill of the individual worker performing the method.

With respect to a method for detecting defects in an insulation panel, the object of the invention is achieved through a method for detecting defects in an insulation panel according to claim 1. With respect to a mobile device for detecting defects in an insulation panel, the object of the invention is achieved through a mobile device for detecting defects in an insulation panel according to claim 15. Furthermore, with respect to a system for detecting defects in an insulation panel, the object of the invention is achieved through a system for detecting defects in an insulation panel according to claim 16.

The invention is based on the recognition that nowadays mobile devices such as smart phones are almost ubiquitously carried by persons while working and that such mobile devices already provide a lot of the basic technology which can be used for a computer-based ultrasonic inspection of the insulation panel. Therefore, at most few and comparatively inexpensive additional hardware items are required to be able to perform an acoustic testing of an insulation panel at virtually any site.

The method according to the invention is for detecting defects in an insulation panel, which insulation panel comprises a solid foam core. The insulation panel may also consist of the solid foam core. The solid foam core substantially consists of solid foam material. In addition, the insulation panel may in addition comprise plastic reinforcement elements. Preferably, the insulation panel comprises at least one wall layer in area contact with the solid foam core. The wall layer may comprise fiberglass and/or a gelcoat.

In the method according to the invention, a mobile application is executed on a mobile device. The mobile device is preferably a portable device. The mobile device is further preferably a portable computer, a mobile phone or a smart phone. The mobile application may be any kind of software running in the mobile device. Preferably, the mobile device is configured for wireless communication. In particular, the mobile device may be configured for wireless communication in a cellular network.

Further in the method according to the invention, an emitting apparatus emits an outgoing acoustic signal into the solid foam core for detecting defects in the solid foam core and a reception apparatus receives an incoming acoustic signal, wherein the received incoming acoustic signal is relayed to the mobile application. For emitting the outgoing acoustic signal into the solid foam core, a couplant between the emitting apparatus and the solid foam core may be used. Such a couplant may be a liquid couplant, e.g. based on propylene glycol, a gel couplant based on e.g. glycerin, a grease couplant based on e.g. silicon or a dry couplant based on e.g. elastomers or an adhesive couplant based on e.g. a silicon rubber compound. The outgoing acoustic signal may also pass through further layers of the insulation panel. Thus, the mobile application receives the incoming acoustic signal and processes it in some way, which processing may comprise or consist of forwarding or transmitting the incoming acoustic signal.

In the method according to the invention, the received incoming acoustic signal is analyzed and wherein based upon the analysis of the received incoming acoustic signal a defect detection result is generated. This is based on the fact that a solid foam core with defects will result in a different transmission of the acoustic signal through the solid foam core than a solid foam core which does not have defects, with the difference further depending on the number and quality of the defects in the solid foam core. Therefore, an analysis of the received incoming acoustic signal makes it possible to provide some information on the presence of defects. The analysis of the received incoming acoustic signal may comprise an analysis of the received incoming acoustic signal in the time domain and/or in the frequency domain. The analysis may also comprise a comparison with the outgoing acoustic signal, also in the time domain and/or in the frequency domain.

The mobile device according to the invention is for detecting defects in an insulation panel. The mobile device according to the invention comprises a mobile application executable on the mobile device, an emitting apparatus for emitting an outgoing acoustic signal into the solid foam core for detecting defects in the solid foam core and a reception apparatus for receiving an incoming acoustic signal.

In order to reliably detect defects in particular in an insulation panel the mobile device is configured to relay the received incoming signal to the mobile application, to analyze the received incoming acoustic signal and to generate based upon the analysis of the received incoming acoustic signal a defect detection result.

The system according to the invention is for detecting defects in an insulation panel. The system according to the invention comprises an insulation panel with a solid foam core, a mobile device on which a mobile application is executed, an emitting apparatus for emitting an outgoing acoustic signal into the solid foam core for detecting defects in the solid foam core and comprises a reception apparatus for receiving an incoming acoustic signal.

The system according to the invention is configured to relay the received incoming signal to the mobile application, to analyze the received incoming acoustic signal and to generate based upon the analysis of the received incoming acoustic signal a defect detection result.

Features, advantages and preferred embodiments of the method according to the invention correspond to features, advantages and preferred embodiments of both the mobile device and the system according to the invention and vice versa.

The defect detection result may be information with any kind of specificity. The defect detection result may provide if any defects were detected and, if they were, their number and location within the solid foam core. The defect detection result may also be a qualitative or quantitative indication of the likelihood of the presence of defects within the solid foam core.

In principle, the solid foam core may substantially consist of any solid foam material. It is preferred that the solid foam core comprises polyurethane or that the solid foam core substantially consists of polyurethane.

The acoustic signal may in principle have an arbitrary frequency spectrum. Preferably, the outgoing acoustic signal has a frequency spectrum extending below 20 kHz and the incoming acoustic signal has a frequency spectrum extending below 20 kHz. It may also be that the outgoing acoustic signal has a frequency spectrum substantially below 20 kHz and that the incoming acoustic signal has a frequency spectrum substantially below 20 kHz. Thus, the outgoing acoustic signal and the incoming acoustic signal are substantially in the audible frequency spectrum. This has the advantage that a person executing the method according to the invention can also rely on his own hearing to supervise the process and can also contribute to detect defection based on his own expertise and experience.

In an alternative, it is preferred that the outgoing acoustic signal is an ultrasound signal and the incoming acoustic signal is an ultrasound signal. In other words, it is preferred that the outgoing acoustic signal has a frequency spectrum substantially above 20 kHz and that the incoming acoustic signal has a frequency spectrum substantially above 20 kHz. This has the advantage that ultrasound acoustic signals have particularly good properties for detect defection, in particular by providing a high resolution in terms of locating a defect by virtue of their short wavelength.

The above preferred distributions of the frequency spectrum in particular mean that the substantial part of the energy of the outgoing acoustic signal and of the incoming acoustic signal, respectively, is in the frequency spectrum below 20 kHz or alternatively above 20 kHz. It is further preferred that the frequency spectrum of the outgoing acoustic signal is substantially identical to the frequency spectrum of the incoming acoustic signal.

In principle, there are a number of possible kinds of relationships between the outgoing acoustic signal and the incoming acoustic signal. In a preferred embodiment of the method, the incoming acoustic signal comprises at least one reflection signal of the outgoing acoustic signal. This corresponds to the principle in acoustic testing in which one or more reflections of the emitted signal or waveform are received for analysis. The at least one reflection signal may be a reflection from a defect or from a wall surface of the solid foam core.

In a further preferred embodiment of the method, the incoming acoustic signal comprises at least one through-transmission signal of the outgoing acoustic signal. In this scenario, the outgoing acoustic signal corresponds to the attenuated incoming acoustic signal which substantially has not been subject to reflection. Here, the presence of a defect leads to attenuation characteristics which are different to those when there are no defects.

According to a preferred embodiment of the method, the mobile device comprises a mobile device case forming an encasing for the mobile device. Thereby, the in particular further components of the mobile device are encased and contained within the mobile device case. In other words the mobile device case substantially surrounds and encloses the further components of the mobile device.

In principle, the emitting apparatus may be unrelated to the mobile device to which the received incoming acoustic signal is relayed. In this case the emitting apparatus may be comprised by a different mobile device or may be a device unrelated to any mobile device. According to a further preferred embodiment of the method, the mobile device comprises the emitting apparatus. Thus, the emitting apparatus is a part of the mobile device. Thus, no additional emitting apparatus beyond the mobile device is required. Here it is further preferred that the emitting apparatus is arranged substantially within the mobile device case. In particular, it may be that the emitting apparatus is a speech output speaker. This is an output speaker which is also configured for outputting speech. In this way, the apparatus used for outputting speech is also used for emitting the outgoing acoustic signal. Preferably the speech output speaker is a speech output speaker of the mobile device.

In a preferred embodiment of the method, the mobile device comprises a port arrangement for connecting external devices to the mobile device. In particular, the port arrangement may be for connecting external devices to the mobile devices for signal transmission. It is preferred that the port arrangement is arranged substantially at the mobile device case. Thus, the port is also at the boundary of the mobile device formed by the mobile device case.

In a further preferred embodiment of the method, the emitting apparatus is connectable with the port arrangement. In this way, the emitting apparatus is a device external to the mobile device, thereby providing greater flexibility in the kind of emitting apparatus that may be used. It may in particular be that the emitting apparatus is connected with the port arrangement and arranged substantially outside the mobile device case. The connection with the port arrangement may also rely on additional means. Thus it may be that the emitting apparatus is connected with the port arrangement via an extended speaker wire arrangement.

As observed for the emitting apparatus in principle the reception apparatus may be separate and independent of the mobile device. Yet according to a preferred embodiment of the method, the mobile device comprises the reception apparatus. It is further preferred that the reception apparatus is arranged substantially within the mobile device case.

According to a further preferred embodiment of the method, the reception apparatus is a speech microphone and preferably a speech microphone of the mobile device. The term speech microphone here means that the reception apparatus is configured for receiving and processing speech.

It may also be that the reception apparatus is connectable with the port arrangement. Here it is further preferred that the reception apparatus is connected with the port arrangement and arranged substantially outside the mobile device case. This also provides additional options for the choice of the reception apparatus by not being restricted to a built-in apparatus of the mobile device. The connection of the reception apparatus to the port arrangement may also comprise additional means. Thus it is preferred that the reception apparatus is connected with the port arrangement via an extended microphone wire arrangement.

A preferred embodiment of the method is characterized in that the insulation panel is an insulation panel for a refrigerated container. It may also be that the insulation panel is comprised by a refrigerated container comprising a plurality of insulation panels. Thus, according to the method an insulation panel may be tested which has already been assembled to a refrigerated container.

In principle, the analysis of the received incoming and the generation of the defect detection result may be performed by any computing arrangement or even in a cloud computing environment. A further preferred embodiment of the method is characterized in that the mobile application analyzes the received incoming acoustic signal and that the mobile application generates the defect detection result. In this way, it becomes possible to perform the analysis and the generation of the detection results without having to rely on the connectivity to other computing resources.

Likewise, the method can be performed more autonomously if the generation of the outgoing acoustic signal does not have to rely on outside resources. Thus according to a preferred embodiment of the method, the mobile application transmits preferably via the mobile device an outgoing acoustic signal to the emitting apparatus. Here it is further preferred that the mobile application generates the outgoing acoustic signal.

However, it may also be that the mobile device receives the outgoing acoustic signal via wireless transmission from an analysis server. This makes it possible to receive updates to the outgoing acoustic signal, for example based on characteristics of the insulation panel under test. The wireless transmission may also be a cellular transmission.

Further it may be advantageous to be able to have additional computing and data resources for the analysis and the generation of the detection results. According to a further preferred embodiment of the method, the mobile device transmits the received incoming acoustic signal to an analysis server via a wireless transmission. This wireless transmission may also be a cellular transmission. Here it is further preferred that the analysis server analyzes the received incoming acoustic signal and that the analysis server generates the defect detection result. Relying on such an analysis server increases the data which is provided for analysis to the analysis instance, thereby making it possible to improve the analysis results continually. Any improvement in the analysis process can thereby be immediately applied to the next received incoming acoustic signal processed by the analysis server. It may in particular be that the analysis server transmits the defect detection result to the mobile device via wireless transmission.

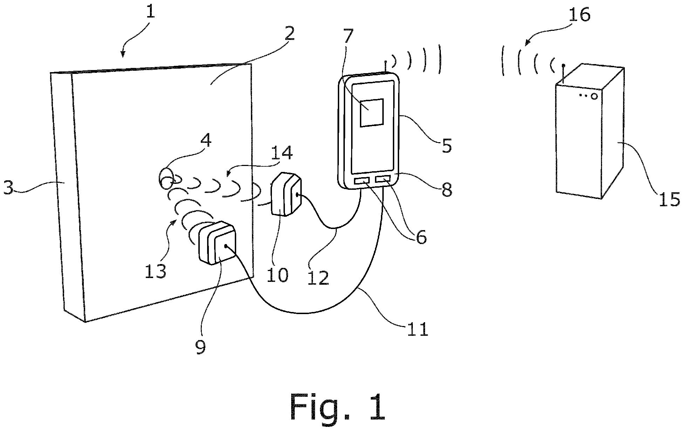

Further advantages and preferred features are discussed in the following description with respect to the Figures. In the following it is shown in
- Fig. 1: a schematic view of a mobile device and an insulation panel of an embodiment of the system according to the invention and for carrying out an embodiment of the method according to the invention.

The insulation panel 1 shown in Fig. 1 is part of an embodiment of a system according to an embodiment of the invention, which system is also configured to execute an embodiment of the method according to the invention. The insulation panel 1 comprises a wall layer 2 and a solid foam core 3 consisting substantially of polyurethane. It is an insulation panel 1 for a refrigerated container, which is here not shown. In the solid foam core 3, a defect 4 in the form of a void exists, which for the sake of clarity has been illustrated larger than scale. A mobile device 5, which here is a smart phone, comprises a port arrangement 6 consisting of two separate connection ports. A mobile application 7 is executed on the mobile device 5, which is enclosed by a mobile device case 8.

An emitting apparatus 9 and a reception apparatus 10 are connected to the port arrangement 6 via an extended speaker wire arrangement 11 and an extended microphone wire arrangement 12, respectively.

The mobile application 7 generates an outgoing acoustic signal 13, which is transmitted via the mobile device 5 and the extended speaker wire arrangement 11 to the emitting apparatus 9, which emits it into the solid foam core 3. For this, a couplant, namely based on glycerin, not shown in the Figure is used. The emitted outgoing acoustic signal 13 is reflected on the one hand on the far wall of the solid foam core 3 and also by the defect 4 in the solid foam core 3. These reflections present an incoming acoustic signal 14 which is received by the reception apparatus 10 and from this relayed to the mobile application 7 via the extended microphone wire arrangement 12.

Triggered by the mobile application 7, the mobile device 5 transmits the received incoming acoustic signal 14 to a distant analysis server 15 via a wireless transmission 16 which is here a cellular transmission.

The analysis server 15 analyzes the received incoming acoustic signal 14, identified the defect 4 and generates an according defect detection result which is then transmitted to the mobile device 5 via a wireless transmission 16.

In the mobile device 5, the mobile application 7 generates a visual or acoustic output indicating the defect 4 in accordance with the received defect detection result. Thereby, a person having on site just the mobile device 5, the emitting apparatus 9 and the reception apparatus 10 with the corresponding wire arrangements is able to identify defects in the insulation panel 1 without having to have personal expertise in identifying defects based on acoustic responses.

## Claims

1. Method for detecting defects (4) in an insulation panel (1), which insulation panel (1) comprises a solid foam core (3), wherein a mobile application (7) is executed on a mobile device (5), wherein an emitting apparatus (9) emits an outgoing acoustic signal (13) into the solid foam core (3) for detecting defects (4) in the solid foam core (3), wherein a reception apparatus (10) receives an incoming acoustic signal (14), wherein the received incoming acoustic signal (14) is relayed to the mobile application (7), wherein the received incoming acoustic signal (14) is analyzed and wherein based upon the analysis of the received incoming acoustic signal (14) a defect detection result is generated.

2. Method according to claim 1, **characterized in that** the incoming acoustic signal (14) comprises at least one reflection signal of the outgoing acoustic signal (13).

3. Method according to claim 1 or 2, **characterized in that** the incoming acoustic signal (14) comprises at least one through-transmission signal of the outgoing acoustic signal (13).

4. Method according to one of claims 1 to 3, **characterized in that** the mobile device (5) comprises the emitting apparatus (9), preferably, that the emitting apparatus (9) is arranged substantially within the mobile device case (8), in particular, that the emitting apparatus (9) is a speech output speaker, further preferably of the mobile device (5).

5. Method according to one of claims 1 to 4, **characterized in that** the mobile device (5) comprises a port arrangement (6) for connecting external devices to the mobile device (5), preferably, wherein the port arrangement (6) is arranged substantially at the mobile device case (8).

6. Method according to claim 5, **characterized in that** the emitting apparatus (9) is connectable with the port arrangement (6), in particular, that the emitting apparatus (9) is connected with the port arrangement (6) and arranged substantially outside the mobile device case (8), further preferably, that the emitting apparatus (9) is connected with the port arrangement (6) via an extended speaker wire arrangement (11).

7. Method according to one of claims 1 to 6, **characterized in that** the mobile device (5) comprises the reception apparatus (10), preferably, that the reception apparatus (10) is arranged substantially within the mobile device case (8).

8. Method according to one of claims 1 to 7, **characterized in that** the reception apparatus (10) is a speech microphone, preferably of the mobile device (5), in particular, that the reception apparatus (10) is connectable with the port arrangement (6).

9. Method according to claim 8, **characterized in that** the reception apparatus (10) is connected with the port arrangement (6) and arranged substantially outside the mobile device case (8), preferably, that the reception apparatus (10) is connected with the port arrangement (6) via an extended microphone wire arrangement (12).

10. Method according to one of claims 1 to 9, **characterized in that** the mobile application (7) analyzes the received incoming acoustic signal (14) and that the mobile application (7) generates the defect detection result

11. Method according to one of claims 1 to 10, **characterized in that** the mobile application (7) transmits, in particular via the mobile device (5), an outgoing acoustic signal (13) to the emitting apparatus (9), preferably, that the mobile application (7) generates the outgoing acoustic signal (13).

12. Method according to one of claims 1 to 11, **characterized in that** the mobile device (5) receives the outgoing acoustic signal (13) via wireless transmission (16) from an analysis server (15).

13. Method according to one of claims 1 to 12, **characterized in that** the mobile device (5) transmits the received incoming acoustic signal (14) to an analysis server (15) via a wireless transmission (16), preferably, that the analysis server (15) analyzes the received incoming acoustic signal (14) and that the analysis server (15) generates the defect detection result, in particular, that the analysis server (15) transmits the defect detection result to the mobile device (5) via wireless transmission (16).

14. Mobile device (5) for detecting defects (4) in an insulation panel (1), the mobile device comprising a mobile application (7) executable on the mobile device (5), an emitting apparatus (9) for emitting an outgoing acoustic signal (13) into the solid foam core (3) for detecting defects (4) in the solid foam core (3) and comprising a reception apparatus (10) for receiving an incoming acoustic signal (14), wherein the mobile device is configured to relay the received incoming signal (14) to the mobile application (7), to analyze the received incoming acoustic signal (14) and to generate based upon the analysis of the received incoming acoustic signal (14) a defect detection result.

15. System for detecting defects (4) in an insulation panel (1), the system comprising an insulation panel (1) with a solid foam core (3), a mobile device (5) on which a mobile application (7) is executed, an emitting apparatus (9) for emitting an outgoing acoustic signal (13) into the solid foam core (3) for detecting defects (4) in the solid foam core (3) and comprising a reception apparatus (10) for receiving an incoming acoustic signal (14), wherein system is configured to relay the received incoming signal (14) to the mobile application (7), to analyze the received incoming acoustic signal (14) and to generate based upon the analysis of the received incoming acoustic signal (14) a defect detection result .
